# EUROPEAN PATENT SPECIFICATION

(11) **EP 4 524 480 B1**
(45) Date of publication and mention of the grant of the patent: **18.11.2026**
(21) Application number: 23197595.4
(22) Date of filing: 15.09.2023
(51) Int. Cl.: F24D 19/10, F24F 11/64, F24F 11/84, F24H 15/104, F24H 15/212, F24H 15/305, F24H 15/421, G05D 23/19

(54) **VERIFICATION FOR A HEAT EXCHANGE ARRANGEMENT**
VERIFIZIERUNG FÜR EINE WÄRMETAUSCHERANORDNUNG
VÉRIFICATION POUR UN AGENCEMENT D'ÉCHANGE DE CHALEUR

(43) Date of publication of application: 19.03.2025
(73) Proprietor: Danfoss A/S, 6430 Nordborg (DK)
(72) Inventor: Størner, David, 6430 Nordborg (DK); Henriksen, Tommy, 6430 Nordborg (DK)
(74) Representative: Keil & Schaafhausen Patentanwälte PartGmbB

(56) References cited:
- EP-A1- 3 425 291
- EP-B1- 3 034 955
- DE-A1- 102021 110 134
- DE-B4- 102012 020 750

## Description

The present invention relates to a controller, for a control system for controlling a heat exchange arrangement with a number of indoor heat exchange segments, wherein the number is at least two, wherein the control system comprises, respectively for each of the number of heat exchange segments, a corresponding heat exchange adjuster for individually adjusting a heat exchange output provided by the heat exchange segment, and at least one corresponding sensor for providing an individual measurement signal indicative of the heat exchange output provided by the heat exchange segment and/or a temperature in a room at the corresponding heat exchange segment, wherein the controller is configured to be operatively coupled to the heat exchange adjusters and the sensors, to store assignments between the heat exchange adjusters and the individual measurement signals, and to control the heat exchange adjusters individually based on the respective assigned measurement signals.

EP 3 425 291 A1, DE 10 2021 110 134 A1, EP 3 034 955 B1 and DE 10 2012 020 750 B4 relate to assigning temperature sensors to heat exchange adjusters.

The present invention further relates to a monitoring system for a control system for controlling a heat exchange arrangement with a number of heat exchange segments, wherein the number is at least two, wherein the control system comprises, for each of the number of heat exchange segments, a corresponding heat exchange adjuster for individually adjusting a heat exchange output provided by the respective heat exchange segment, wherein the monitoring system comprises, respectively for each of the number of heat exchange segments, at least one corresponding sensor for providing an individual measurement signal indicative of the heat exchange output provided by the heat exchange segment and/or a temperature in a room at the corresponding heat exchange segment, for example at least one corresponding room temperature sensor.

The present invention relates further to a control system for controlling a heat exchange arrangement with a number of heat exchange segments, wherein the number is at least two, wherein the control system comprises, for example the number of heat exchange segments, a heat exchange adjuster for individually adjusting a heat exchange output provided by the respective heat exchange segment, wherein the heat exchange adjusters are actuators of flow valves for the heat exchange segments.

The present invention relates further to a method for automatically determining, checking, and/or correcting assignments between heat exchange adjusters and individual measurement signals in a control system for controlling a heat exchange system with a number of heat exchange segments, wherein the number is at least two, providing in the control system, for each of the number of heat exchange segments,
- a corresponding heat exchange adjuster for individually adjusting a heat exchange output provided by the corresponding heat exchange segment, and
- at least one corresponding sensor providing an individual measurement signal indicative of the heat exchange output provided by the heat exchange segment and/or a temperature in a room at the corresponding heat exchange segment and a controller operatively coupled to the heat exchange adjusters and the sensors.

Each heat exchange adjuster may include (especially consist of) an actuator, e.g. for adjusting a flow of a heat exchange medium to the corresponding heat exchange segment through a corresponding flow valve. For example, the heat exchange adjusters may include (especially may be) actuators of floor heating valves with a valve drive controllable by the controller. Each actuator may include at least one wax motor and/or an electric motor.

The temperature at the corresponding heat change segment may be a floor, wall, ceiling, and/or room temperature adjacent to the heat exchange segment. Each of the number of heat exchange elements may be arranged at a different room, for example in a building, ship, or alike.

By storing the assignments between the heat exchange adjusters and the sensors, for each of the number of heat exchange segments, (the input of) the individual measurement signal from the corresponding sensor can be uniquely assigned with (a control output for) the corresponding heat exchange adjuster for the same heat exchange segment.

Heat exchange segments are, for example, floor heating an/or cooling elements, wall heating and/or cooling elements, cooling ceilings, and the like.

After an installation process of the heat exchange segments, the heat exchange adjusters, and the sensors and manually programming the assignments, it needs to be determined whether the heat exchange segments, more precisely the heat exchange adjusters, are correctly installed and assigned (paired) with the correct temperature sensors. In order to check whether the temperature sensor for an individual heat exchange segment and the heat exchange adjuster for the same heat exchange segment are actually installed correctly at this heat exchange segment and further are manually assigned (paired) correctly with respect to each other, an installing person controls each heat exchange segment in turn individually. To do so, the installing person provides an input to the controller, such that the controller provides a control signal to one of the heat exchange adjusters such that the corresponding heat exchange segment generates a heat exchange output and hence causes a temperature change in the room with this corresponding heat exchange segment. The heat exchange output should detected by the assigned sensor, which provides respective data to the controller. For example, the assigned sensor may detect a temperature change in response to said control signal. This indicates that the assignment is correct. In order to ensure reliable correlation between the control signal to the individual following temperature change, the check must be performed individually for each heat exchange segment one after the other. As an example, initially all flow valves are closed and then the actuators are triggered one after another to open. Only one flow valve may be open at the same time.. Thus, only one of the heat exchange segments is performing a heat exchange at a time. The correctness of the assignments must be verified for all assignments, i.e. for each heat exchange adjuster and each sensor.

In general, heat exchange system is a slow system, such that a long time is required until the installing person can reliably detect determine whether the correct heat exchange segment was triggered. Such a time period is up to several hours, depending on the size of the heat exchange segment, length of a supply line etc. To avoid errors, there needs to be at least a timely delay between triggering different heat exchange segments. Depending on the characteristics of each heat segment, e.g. size, length to heat source, insulation etc. the time delay is quite long.

As soon as one heat exchange segment is triggered sufficiently, e.g. for heating up or cooling down (depending on a heating application or a cooling application), the installing person can take notes, e.g. by taking a picture using a heat sensitive camera. After the installing person finished documenting the correct assignment of the heat exchange adjuster and the sensor for an individual heat exchange segment, he can continue with the next heat exchange segment.

Further, the heat exchange adjusters and the heat exchange segments can be arranged in different parts of a building. For example, the heat exchange segments are provided in a living room, kitchen, and bathroom, whereas the heat exchange adjusters are arranged in a technique room in the basement. The heat exchange segments and the heat exchange adjusters are connected via labeled pipes. However, the labels can be removed or destroyed during an installation process. Therefore, there might be uncertainties whether all pipes are installed to the correct heat exchange segments respectively heat exchange adjusters. In order to verify the correct assignment of heat exchange segments with corresponding heat exchange adjusters, the installing person needs to go to the heat exchange segment he just triggered, respective the room, verify that the presently triggered heat exchange adjuster is coupled to the correct heat exchange segment and repeat these steps until it is verified that each heat exchange segment is coupled to a corresponding heat exchange adjuster.

It is possible that failures occur in the manual pairing between the sensors and the heat exchange adjusters.

For example, the sensor for a first heat exchange segment in a first room might be inadvertently assigned to the heat exchange adjuster for a second room. If the installing person triggers that a temperature in the first room shall be increased, the controller controls the heat exchange adjuster for the second room to increase the heat exchange output. The incorrect assignment can be recognized by determining that the temperature in the first room has not increased after some time and/or by determining that the temperature in the second room rises instead.

The verification of the assignments requires a long period of time, during which the installing person is bound to one heat exchange segment.

Thus, the objective of the present invention is to provide a controller, a monitoring system, a control system, and a method allowing easy verification of a correct configuration of a heat exchanger system.

The above objective is solved by a controller as described in the outset with the features according to claim 1.

The controller includes a verification functionality for automatically determining checking, and/or correcting the assignments between the heat exchange adjusters and the measurement signals. Since the verification of the assignments is performed automatically, the installing person is not bound to the specific heat exchange system but can perform other tasks meanwhile. The verification functionality can take place over night since no persons required to manually take notes, pictures, or alike. Since the verification process is performed automatically by the controller, only little manpower is required to provide the assessment whether the assignments between heat exchange adjusters and the sensors are correct.

According to one aspect, in the case that a verification is not possible due to incorrect assignments, the controller may (be configured to) correlate the corresponding respective sensors (measurement signals) and the respective heat exchange adjuster automatically and to correct the assignments accordingly. Further, since heat exchange systems usually comprise sensors for providing individual measurement signals for the heat exchange output, there is no need to provide further sensors. Existing sensors can be used to determine, check, and/or correct the correct assignments between the heat exchange adjusters and the measurement signals from the sensors.

The respective at least one corresponding sensor may include a temperature sensor, e.g. a room temperature sensor and/or an infrared temperature sensor.

In one embodiment, the heat exchange arrangement is a floor heating arrangement with a number of floor heating segments. Each of the number of floor heating segments may be arranged in a different room of a structure, e.g. of a building, motorhome, or a ship.

In one embodiment, the controller is, for the automatic verification functionality, configured to, for at least the number minus one of the number of the heat exchange segments,
- control the heat exchange adjusters individually according to a (at least one) test scheme, and
- to determine, check, and/or correct the assignments between the heat exchange adjusters and the measurement signals by analyzing responses for the measurement signals to the control according to the test scheme.

Assigning only the number minus one of the numbers of the heat exchanger segments to the heat exchanger adjusters is possible, since if the number minus one assignments are correct, the last assignment is also correct. This allows an even faster determination and check of the correct assignments of the heat exchanger segments to the corresponding heat exchanger adjusters, since one assignment less has to be checked.

Naturally, whenever it is mentioned that the controller is configured to do something for at least the number minus one of the number of the heat exchange segments, the controller can be configured to do the same (all of the number of) heat exchange segments. This allows for a particularly precise and/or reliable determination, check and/or correction of the assignments.

According to an aspect, the controller may include, e.g. store instructions for the (at least one) test scheme. The test scheme can be predetermined. The test scheme can be partly predetermined and comprise random aspects. For example, the test scheme can include randomizing aspects, e.g. for unique target temperature values and/or unique triggering times for the individual heat exchange segments. The test scheme my include boundary conditions for the randomizing aspects to ensure that a unique allocation of the individual measurement signals to the control of the individual heat exchange adjusters ensured, e.g. a minimum temperature difference between all randomized individual target temperature values, a minimum time difference between subsequently triggering different heat exchange adjusters, or the like.

In general, different (e.g. unique) target temperature values may mean different (e.g. unique) target temperature values that shall be reached at the individual temperature sensors. This might be indicated shortly as different (e.g. unique) target temperature values for the sensors (at least at the number minus one of the sensors).

For example, triggering may mean controlling the actuator to change a state of the flow valve (e.g. from a closed to fully open state).

The test scheme may be adapted to consider external effects. External effects can be environmental influences such as sun light, wind, humidity etc. Furthermore, the heat exchange segments might not provide an exact heat exchange output but might overshoot or stay below the target temperature value. Thus, the test scheme might comprise a tolerances. The tolerances can be for example 2%, 1.5%, 1% or 0,5%. Based on the tolerances, the acceptable final temperature can vary in a range between a minimum value and a maximum value, wherein the minimum value corresponds to a lower tolerance, while the maximum value corresponds to a higher tolerance.

The test scheme may comprise a number of steps: Gathering information of the heat exchange segments, of the individual measurement signals of each sensor, assigning the information of the heat exchange segments with the individual measurement signals, and verifying that the heat exchange segments are assigned to corresponding heat exchange adjusters.

In a preferred embodiment, the control system comprises, respectively for each of the heat exchange segments, a corresponding thermostat, the thermostat comprising at least one corresponding sensor for providing the individual measurement signal being indicative of the temperature in a room at the corresponding heat exchange segment.

The thermostats may allow the users to set user-targets for the temperatures at the respective thermostats. The thermostats may provide the user-targets to the controller. The controller may be configured to regulate the heat exchange adjuster for the individual heat exchange segment based on the user-targets for the temperature at the assigned thermostat and the individual measurement signals received from the assigned thermostats (which may be indicative of actual temperatures at the respective thermostats), respectively. For performing the verification functionality, the controller may set target temperature values on its own, e.g. according to the test scheme.

According to one aspect, the controller is, for the automatic verification functionality, configured to, for at least the number minus one of the number of heat exchange segments,
- distinguishably control of the heat exchange adjusters for causing distinguishable (e.g. unique) heat exchange outputs at these heat exchange segments,
- check the responses of the individual measurement signals to the distinguishable control, and
- determining, checking, and/or correcting the assignments between the heat exchange adjusters and the measurement signals (the sensors) based on the distinguishable control of the heat exchange adjusters and the responses of the measurement signals, for example based on checking for correlations between the response of the measurement signals to the distinguishable control of the heat exchange adjusters.

According to one exemplary aspect, if the controller detects, while performing the verification functionality, that there is at least a minimum correlation between an individual measurement signal and the individual distinguishable control (output) for one of the heat exchange adjusters, it determines or confirms the assignment between said individual measurement signal (and hence the corresponding sensor) and said heat exchange adjusters. Similarly, according to one exemplary aspect, if the controller detect, while performing the verification functionality, that there is less than the minimum correlation between the individual measurement signal and the individual distinguishable control (output) for one of the heat exchange adjusters, it determines no assignment between said individual measurement signal (and hence the corresponding sensor) and said heat exchange adjusters or, if such an assignment is stored, it determines that this pre-stored assignment is incorrect.

The distinguishing control of the heat exchange adjusters (for the verification functionality) can, for example, include one of, several of, or all of the following:
- controlling the heat exchange adjusters to generate different (e.g. unique) heat exchange outputs (at the concerned heat exchange segments) per time,
- controlling the heat exchange adjusters to activate and/or deactivate heating at the corresponding heat exchange segments at different (e.g. unique) times,
- controlling the heat exchange adjusters to activate and or deactivate cooling at the corresponding heat exchange segments at different (e.g. unique) times, and
- controlling the heat exchange adjusters causing different (e.g. unique) temporal modulations of the heat exchange outputs.

Generating different heat exchange outputs per time may include setting (with the heat exchange adjusters) different flow rates, temperatures, and/pressures of a heat exchange medium provided to the heat exchange segments.

The controller is, for the automatic verification functionality configured to, for at least the number minus one of the number of the heat exchange segments, set the corresponding target temperature to a unique target temperature value, and check whether a time average of the temperature indicated by the assigned measurement signal reaches a target range around the corresponding unique target temperature value.

Unique means that the target temperature values are different for different heat exchange segments. For example, the target temperature values may differ from each other by at least two Kelvin. Since a heat exchange output of each heat exchange segment is different from every other heat exchange segment within the heat exchange system during the verification process, the heat exchange output of each heat exchange segment can be reached simultaneously. According to one aspect, the output of each of the heat exchange segment is measured by the sensor, which is compared to the unique target temperature value of the respective heat exchange segment. If the sensor for the individual heat exchange segment indicates that the heat exchange output at this individual heat exchange segment is actually in accordance with the corresponding unique target temperature intended for this individual heat exchange segment, the controller determines that the correct heat exchange adjuster is assigned with this respective heat exchange segment (or at least with the corresponding sensor). Thus, it takes less effort to determine an assignment of the heat exchange segments to the corresponding heat exchange adjusters.

In a preferred embodiment, the controller is, for the automatic verification functionality, configured to, for at least the number minus one of the number of the heat exchange segments, control the corresponding heat exchange adjusters to
- cause increases and/or decreases of the heat exchange output at different times, and
- check whether the assigned measurement signals change in an expected manner during a predetermined time range after the respective heat exchange adjuster has been controlled to cause an increase and/or decrease of the heat exchange output.

By causing an increase or decrease of a heat exchanger output at different time, the corresponding sensors can determine a change in room temperature at different times. Thus, the heat exchange segments can be assigned to heat exchange adjusters.

Alternatively or in addition, the controller is, for the automatic verification functionality configured to, for at least the number minus one of the number of the heat exchange segments, )
- set unique flow rates and/or temperatures for a heat exchange medium provided to the heat exchange segments and
- check correlations between heights of the unique flow rates and/or temperatures for the heat exchange medium provided to the heat exchange segments on the one hand and, on the other hand, the temperatures indicated by the measurement signals and/or in the temperature gradients (derived from the measurement signals).

The term temperature gradient may relate to a change in temperature over time, especially over a predefined period of time. The controller may derive the respective temperature gradient based on the respective measurement signal (which is indicative of the temperature).

Alternatively or in addition, the controller is, for the automatic verification functionality configured to, for at least the number minus one of the number of the heat exchange segments,
- control the heat exchange adjusters to change flow (e.g. open flow) of the heat exchange medium to the corresponding heat exchange segments at different (e.g. unique) trigger times, and
- check for temporal correlations between the trigger times and changes in the temperatures indicated by the measurement signals and/or in the temperature gradients (derived from the measurement signals).

The sensor can be an optical temperature sensor, e.g. an infrared temperature sensor, or a wired temperature sensor, e.g. a thermal element.

In one embodiment, the controller is configured for at least temporary communication with an external device and for one of, several of, or all of the following:
- Receiving information regarding the assignments from the external device and storing the assignments;
- Performing the verification functionality in response to a corresponding input from the external device; and
- Transmitting results regarding the assignments obtained by the verification functionality to the external device.

Using an external device, e.g. a smartphone, a table, a notebook or alike, allows the installing person to easily communicate with the controller and perform certain tasks as starting the automatic verification process, or analyzing the results. The results can be used for example for documentation or alike. Since the external device is just temporarily connected to the controller, the external device can be used for different activities in the meantime.

In one embodiment, the controller comprises a data storage and (is configured to) store(s), in the data storage, at least one of the following:
- instructions for performing the test scheme;
- information regarding the distinguishable control of the heat exchange adjusters;
- the different (e.g. unique) target temperature values;
- the different (e.g. unique) triggering times;
- received individual measurement signals;
- information regarding the responses of the individual measurement signals to the distinguishable control;
- instructions for checking for correlations between the response of the measurement signals to the distinguishable control of the heat exchange adjusters;
- the assignments between the heat exchange adjuster and the measurement signals; and
- information regarding the results of the verification functionality.

The stored information allows a documented verification, which is replicable and understandable for outstanding persons, such as clients.

Besides the storage function, the controller can comprise for example a verification unit, which determines, checks, and/or corrects the assignments between the heat exchanger adjusters and inputs of the individual measurement signals (hence the sensors).

Further, the above objective is solved by a monitoring system according to the offset, wherein the monitoring system comprises the above described controller. The monitoring system can also be used as a verification functionality, resulting in a multiple-use purpose, as e.g. monitoring the heat exchange arrangement and verification of the correct assignment of the heat exchange segments and the heat exchange adjusters. This multiple-use purpose results in a low personal workload since the monitoring system does not need to be replaced or changed in any manner.

According to one aspect of the invention, the monitoring system (and hence the control system) comprises for one of, several of, or all of the number of heat exchange segments (e.g. floor heating segments), two different corresponding sensors for providing, respectively, an individual measurement signal indicative of the heat exchange output provided by the heat exchange segment and/or the temperature in the building at the corresponding heat exchange segment, e.g. a room temperature sensor (as described above). The controller may be operatively coupled to receive the measurement signals from both sensors and may be configured to store assignments between the two measurement signals and a single one of the number of the number of heat exchange adjusters. The controller may be configured to automatically determine, check, and/or correct the assignments between the corresponding heat exchange adjuster and one of or both of the measurement signals from the two corresponding sensors. The two different corresponding sensors may be formed in one device, e.g. in a thermostat.

A suitable thermostat is disclosed in EP 1 640 669 A1, which is hereby included by reference.

In one embodiment, the heat exchange arrangement is a floor heating arrangement, wherein the number of heat exchange segments are floor heating segments, for example in different rooms, wherein the sensor arrangement comprises, respectively for each of the number of floor heating segments, a corresponding floor temperature sensor and/or a corresponding room temperature sensor. In particular, the sensor arrangement may comprise, for each of the number of floor heating segments, a corresponding thermostat. The thermostat comprises the room temperature sensor and/or the floor temperature sensor. Especially, the thermostat can comprise both, the room temperature sensor, and the floor temperature sensor. A suitable thermostat is disclosed in EP 1 640 669 A1. In floor heating arrangements, it is in particular important to verify a correct pairing of the individual heat exchange segments (e.g. individual heating circuits), especially the heat exchange adjusters (e.g. actuators of flow valves for the individual heating circuits) for the individual heat exchange segments on the one hand and the corresponding temperatures sensors at the individual heat exchange segments at the other hand. An incorrect pairing can result in incorrect behavior of the heat exchange arrangement.

**In** one embodiment, the floor temperature sensors are infrared temperature sensors and/or wired temperature sensors. An infrared temperature sensor is a sensor which relies on infrared radiation, which is used to determine a temperature of a surface of the floor at the corresponding heat exchange segment. A wired sensor is, for example, a thermal-element (or thermocouple) which is arranged in the floor at the corresponding heat exchange segment. Each of the sensors can be used to determine the temperature of the floor.

**In** one embodiment, the measurement signals are indicative of absolute individual temperatures adjacent to the respective heat exchange segments and/or of present heat flows provided by the respective heat exchange segments as measurands, wherein the controller is configured to check, in the verification functionality, temporal developments of absolute values and/or gradients of the measurands in response to control signals provided to the heat exchange adjusters for changing the heat exchange outputs provided by the heat exchange segments at different times.

Using the measurands of the (floor) temperature sensors allows an assessment whether the heat exchange segments are in operation (e.g. by detecting that the floor temperature gradient is increased after the corresponding heat exchange segment is triggered, e.g. by opening the flow valve for this heat exchange segment) and/or whether the target temperature value is reached within a predetermined period of time. During the verification functionality, the actual temperature and/or the temperature gradient at the heat exchange segment is measured using the corresponding sensor and correlated with the control / intended behavior of the heat exchange adjuster, for which the (possible or manually programmed) assignment shall be checked. Hence, it can be determined whether the (floor) temperature sensor is correctly assigned to the heat exchange adjuster which is functionally coupled to the correct heat exchange segment at said individual floor temperature sensor. **If** no assignment has been made yet, the reaction of the temperature sensors to the unique control of the heat exchange adjusters (and hence the heat exchange outputs at the heat exchange segments) allows for determining the correct assignments between the individual (floor) temperature sensors and the heat exchange adjusters.

Further the above described objective is solved by a control system as described in the offset, wherein the control system comprises the above described monitoring system, wherein the controller is configured to control the actuators of the flow valves for the heat exchange segments. Such a heat exchange output can be measured, such that the measurands can be used to assess whether the heat exchange segments are assigned to the corresponding heat exchange adjuster. If a heat exchange segment is assigned to a wrong heat exchange adjuster, the assignment can be corrected by the controller without changing a hardware installment of pipes, heat exchange segments, heat exchange adjusters and/or their couplings.

In particular, the controller can be configured to control the flow valves respectively heat exchange adjusters based on the measurement signals received from the thermostats (in normal operation different from the verification functionality). As noted above, the controller may be configured to regulate the heat exchange adjuster for the individual heat exchange segment based on the user-targets for the temperature at the assigned thermostat and the individual measurement signals received from the assigned thermostats (which may be indicative of actual temperatures at the respective thermostats), respectively. Consequently, the individual heat exchange segment (floor heating segment) outputs the heat exchange output (either heating or cooling) based on the actual temperature and the user-target.

Further, the above described objective is solved by a method according to claim 12. The method comprises, inter alia, the following steps:
- controlling the heat exchange adjusters according to a test scheme by means of the controller,
- monitoring responses of the measurement signals to the control according to the test scheme by means of the controller, and
- automatically determining, checking, and/or correcting assignments between the heat exchange adjusters and the measurement signals by analyzing the responses.

The test scheme may constitute a verification scheme, to assess the assignments between the measurement signals (hence the sensors) and the heat exchange adjusters, e.g. the actuators of the flow valves for the heat exchange segments, or alike.

According to one aspect, in case the heat exchange arrangement comprises more than a predetermined number of heat exchange segments, the heat exchange segments may be split into two groups, and the above method is performed for each group of heat exchange segments. In other words, the method is performed in groups, one the another. Each of the group comprises a number of heat exchange segments, wherein the numbers are integer numbers between five and twenty, preferably odd numbers between five (included) and twelve. This allows a high reliability of the verification. This allows, for example, that the different target temperatures values have to be "unique" only with regard to the same group.

The term "verification" means determining, checking, and/or correcting the assignments between heat exchange adjusters and heat exchange segments.

The aspects, embodiments, and modifications as well as the advantages described with respect to the controller, the monitoring system, the control system, and the method apply accordingly for each other, respectively.

In one embodiment, the method further comprises that the controller automatically analyzes the responses and automatically generates a report regarding the assignments or that the controller transmits the responses (e.g. in form of the measurement signals collected during performing the test scheme) to an external device, wherein the external device includes and/or receives, from the controller, information regarding the test scheme, and wherein the external device automatically analyzes the responses and automatically generates a report regarding the assignments. Based on the report regarding the assignments, the installing person can assess whether the assignments between the heat exchange adjusters and the sensors are correct or wrong. Further, the report is a documentation of the assignments which the installing person can use to document the correct installment and configuration of the heat exchange arrangement without further effort, e.g. taking thermal pictures or alike.

In one embodiment, the heat exchange segments are floor heat exchange segments, wherein the sensors are infrared temperature sensors, and wherein the test scheme comprises
- setting unique target temperature values for at least the number minus one of heat exchange segments, and/or
- controlling the heat exchange adjusters to change flow (e.g. open flow) of the heat exchange medium to the corresponding heat exchange segments at different (e.g. unique) trigger times.

For example, the test scheme may include that initially all flow valves are closed (i.e. for each of the heat exchange segments, there is zero flow/no flow of heat exchange medium). Then, one heat exchange after another is triggered to cause a maximum flow of the heat exchange medium to the corresponding heat exchange segment (corresponding flow valve is fully opened). There can be a minimum time difference between subsequent flow changes for different heat exchange segments. Hence, the temperature / temperatures suddenly changes for only one sensor each time. This allow the respective sensor to the heat adjuster that has just been triggered, respectively, in an easy manner. According to one aspect, the heat exchange adjusters are triggered to open one after each other during the test scheme such that always only one of the flow valves is open at the same time at the maximum.

Floor heat exchange segments are used on floor heating systems for heating a floor. To verify the correct assignment of the heat exchange segments and the heat exchange adjusters, the controller provides a unique target temperature value (for the temperatures at at least the number minus one of the sensors) and/or unique trigger times (for at least the number minus one of the heat exchange adjusters) to initiate a corresponding heat exchange output of the heat exchange segments.

The infrared floor temperature sensors (IR floor temperature sensors) measure the floor temperatures. The floor temperature at an individual floor heat exchange segment may change faster than the room temperature at the individual floor heat exchange segment when the corresponding heat exchange adjuster is controlled to change (e.g. increase) the heat exchange output. The local floor temperature might be less influenced by some effects than the room temperature, e.g. if rooms between adjacent rooms are open or if different floor heat exchange segments are installed in one large room.

Depending on the requirements, it might be sufficient to reach a unique target temperature value or at least a predetermined temperature gradient.

In one embodiment, the heat exchange system is a floor heating system, wherein the controller automatically determines, checks and/or corrects the assignments between the heat exchange adjusters and the sensors based on unique target temperature values and/or different trigger times for the heat exchange adjusters, wherein the sensors are infrared floor temperature sensors.

The controller may be configured for automatically correcting wrong assignments.

In one embodiment, the individual measurement signal is provided over a predetermined time period, preferably 24 hours. Based on the individual measurement signal over a period of 24 hours, the measurement signals can be statistically processed, e.g. an average, median and/or mean can be calculated. As a result, environmental aspects, e.g. weather, sunshine, wind or alike, do less affect the analyzation of the responses. Therefore, the analyze is precise.

In one embodiment, the external device is disconnected from the controller over major part of the time period, wherein the external device is preferably disconnected in a middle section of the time period. During the time, in which the external device is disconnected from the controller, the external device can be used in a different application or at a different heat exchange arrangement for verification purposes. For example, the external device is connected to the controller during an initiating process of the verification of the assignment of the heat exchange segments and the corresponding heat exchange adjuster. After the verification was started, the external device is disconnected and can be used differently. As soon as the verification of the assignment of the heat exchange segments and the corresponding heat exchange adjuster. In this case, each controller comprises an identification, which is used to identify the respective heat exchange arrangement such that a mistake of identification is prevented. Alternatively, the external device is turned off to save energy.

In the following, the invention is described in a preferred embodiment with reference to the drawing. Shown hereby:

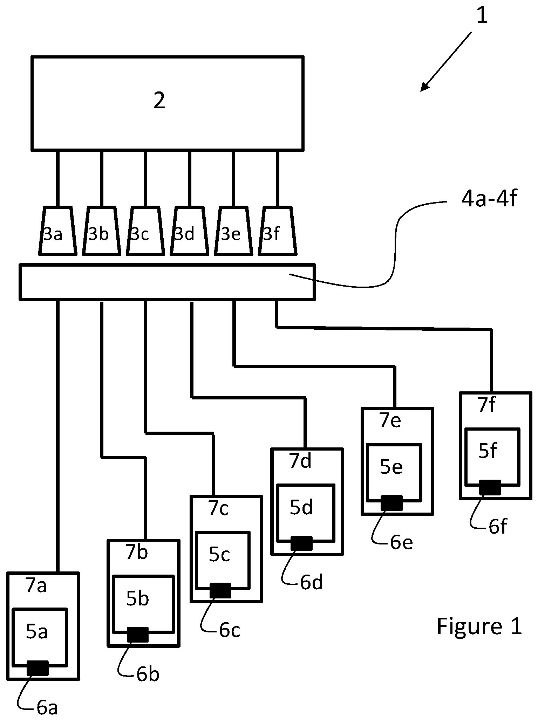

- Fig. 1: A heat exchange arrangement.

The Fig. 1 shows a heat exchange arrangement 1 comprising a controller 2, heat exchange adjusters 3a-3f, flow valve comprising a manifold, wherein a heat exchange medium is flowing through the manifold comprising valves 4a-4f, wherein the valves 4a-4f are adjusted by the heat exchange adjusters 3a-3f. The heat exchange arrangement 1 comprises six heat exchange segments 5a-5f and six corresponding sensors 6a-6f (one for each heat exchange segment 5a-5f). In the present example, the heat exchange arrangement 1 is a floor heating arrangement 1, wherein the heat exchange segments 5a-5f are floor heating segments 5a-5f, wherein each heat exchange segment 5a-5f is arranged in a corresponding room 7a-7f of a building.

Typically, after installation of the heat exchange arrangement 1, the installing person inputs assignments between the sensors 6a-6f and the heat exchange adjusters 3a-3f. The controller 2 stores the assignments in a memory (data storage). The assignments shall ensure that each of the sensors 6a-6f is correctly paired with the heat exchange adjuster 3a-3f for the heat exchange segment 5a-5f in the same room 7a-7f. However, the correctness of the manual assignments (the pairing) should be checked and documented.

The controller 2 is operatively connected to the heat exchange adjusters 3a-3f. The heat exchange adjusters 3a-3f adjust the flow rates of the flow valves 4a-4f, such that each of the heat exchange segments 5a-5f is provided with the desired heat carrying medium. This allows influencing the temperatures in the respective room 7a-7f. In order to monitor the temperature of each room 7a-7f, the sensors 6a-6f provide individual measurement signals for each room 7a-7f.

The sensors 6a-6f are, for example, room temperature sensors, floor temperature sensors, or a combination of a room temperature sensor and a floor temperature sensor, which determine the temperature of elements adjacent to the heat exchange segment 5a-5f. To do so, the sensors 6a-6f are, for example, infrared temperature sensors and/or wired temperature sensors, especially infrared floor temperature sensors and/or wired floor temperature sensors. The floor temperature sensors are more responsive and sensitive regarding a heat exchange output provided by the heat exchange segments 5a-5f compared to a room temperature sensors.

The sensors 6a-6f determine the temperatures (e.g. the floor temperatures) at the corresponding heat exchange segments 5a-5f, wherein the corresponding sensor 6a-6f and heat exchange segment 5a-5f are arranged in the same room 7a-7f, respectively. For example, the infrared temperature sensors determine a surface temperature of the respective floor, wall, ceiling or alike, while the wired sensors determine temperatures below a surface of the floor, wall, ceiling, or of the room air. The information provided by one the sensors 6a-6f is called (individual) measurement signal, respectively.

As the temperature (e.g. the room temperatures and/or the floor temperature) at the individual heat exchange segment 5a-5f is influenced by the heat exchange output provided by this individual heat exchange segment 5a-5f, the temperature sensed by the corresponding sensor 6a-6f (at least a development of this temperature over time) is indicative of the heat exchange output provided by this individual heat exchange segment 5a-5f.

Based on the individual measurement signal provided by the sensors 6a-6f, a monitoring system comprising the controller 2 and the sensors 6a-6f is able to monitor the respective room temperatures and provide adjustment signals to the heat exchange adjusters 3a-3f which control the flow valves 4a-4f. The heat exchange adjusters 3a-3f can be wax motors and/or electromagnetic motors, for example. Each of the heat exchange adjusters 3a-3f can set the corresponding flow valve 4a-4f at least to a closed state and a fully open state. In some embodiments, several of, or all of the heat exchange adjusters 3a-3f can be configured to set the corresponding flow valve(s) to different opening degrees.

In order to verify that the heat exchange segments 5a-5f are operatively connected to the corresponding heat exchanger adjusters 3a-3f, the controller 2 performs a test scheme. To do so, the controller 2 sets a unique individual target temperature value for each room 7a-7f. Such target temperature values are for example 18°C, 20°C, 22°C, 24°C, 26°C and 28°C.

The target temperature values should be sufficiently different from initial temperatures in the rooms 7a-7f after all flow valves 4a-4f have been closed for at least a predetermined period of time. Just for example, it might be assumed that the initial temperatures are 10 °C, respectively. The target temperature values should be below 29°C in order to prevent damaging the building, in particular the floor. Each of the unique individual target temperature values can be differ by at least 1 °C, maybe by at least 2°C, from the most similar unique individual target temperature values to assure that tolerances do not lead to a misinterpretation of sensor data.

In the verification functionality, the room temperatures may be monitored by the sensors 6a-6f over a period of time, for example for 24 hours. During this period, the heat exchange segments 5a-5f should provide a desired heat exchange output resulting in the desired room temperature. The controller 2 controls the individual heat exchange adjusters 3a-3f in order to reach the respective target temperature values. For example, the controller 2 may compare the present temperature indicated by the individual measurement signal from the individual sensor 6a-6f with the target temperature value that shall be reached at this individual sensor 6a-6f, respectively. As long as the present temperature is too low, the controller 2 triggers the heat exchange adjuster 3a-3d to which this individual sensor 6a-6f is assigned in order to open the corresponding flow valve 4a-4f. Hence, a heat exchange medium, e.g. warm water, is supplied to the corresponding heat exchange segment 5a-5f, which in turn provides a heat exchange output at the corresponding room 7a-7f, e.g. in the form of heating the floor of this room 7a-7f. When measurement signal of the individual sensor 6a-6f indicates that the corresponding unique target temperature value at the corresponding room 7a-7f is reached, the controller 2 controls the corresponding heat exchange adjuster 3a-3f to close the corresponding valve 4a-4f. Hence, the heat exchange output at the corresponding heat exchange segment 5a-5f is stopped.

In order to prevent a misinterpretation of environmental aspects, e.g. sunshine, the individual measurement signals provided by the sensors 6a-6f for each room can be determined at intervals, and/or can be statistically processed, e.g. to determine an average, a median and/or alike. After the period of 24 hours, the statistically processed individual measurement signals are compared to the target temperature values for each room 7a-7f. If the target temperature value and the corresponding measured temperature in the respective room are identical, or at least close (e.g. in accordance with a predetermined criterion, e.g. within a predetermined tolerance range), the respective heat exchange segment 5a-5f coupled to the corresponding heat exchange adjuster 3a-3f is correctly assigned in the controller 2 with the correct sensor 6a-6f. If the target temperature value and the measured temperature is not within certain tolerances after a predetermined time with respect to an individual sensor 6a-6f, the assignment for this individual sensor 6a-6f is not correct.

For example, the following incorrect assignments are assumed: The first sensor 6a in the first room 7a is incorrectly assigned with the second heat exchange adjuster 3b for the second heat exchange segment 5b in the second room 7b. Vice versa, the second sensor 6b in the second room 7b is wrongly assigned with the first heat exchange adjuster 3a for the first heat exchange segment 5a in the first room 7a. In the failure functionality (in the test scheme), the controller sets the (first) unique target temperature value for the first sensor 6a to 18 °C and the (second) unique target temperature value for the second sensor 6b to 24 °C. Assuming the same triggering times and heating rates in the two rooms 7a, 7b, the temperatures in both rooms 7a, 7b will reach 18 °C after some time. As a consequence, the controller 2 controls the wrongly assigned second heat exchange adjuster 3b to close the corresponding second flow valve 4b. The second heat exchange segment 5b stops providing heat exchange output (i.e. heating) to the second room 7b. But in fact it is the second sensor 6b which is installed in the second room 7b. The temperature measured by the second sensor 6b will never reach the first unique target temperature value of 24 °C but will remain at 18 °C. As the second sensor 6b is incorrectly assigned to the first heat exchange adjuster 3a, the controller 2 will instead ongoingly control the first exchange adjuster 3a to maintain the first flow valve 4a open and hence heat first room 7a (instead of the second room 7b). The temperature at the first room 7a increases further far beyond the second unique target temperature value of 18 °C. Hence, the controller 2 determines after the predefined time that the assignments of the sensors 6a and 6b are incorrect, respectively.

In case the controller 2 determines an incorrect assignment, the controller 2 may correct the assignment automatically. In the example according to the preceding paragraph, may also automatically correct the assignments by assigning the first sensor 6a with the first heat exchange adjuster 3a and the second sensor 6b with the second heat exchange adjuster 3b.

In the exemplary embodiment, in order to assess whether each of the sensors 6a-6f is assigned with (paired with) the correct heat exchange adjuster 3a-3f, it is sufficient to provide an assessment for the number of heat exchange adjusters 3a-3f minus one. This is based on the fact that there is exactly one sensor 6a-6f and exactly one heat exchange adjuster 3a-3f for each one of the heat exchange segments 5a-5f. Exactly one of the sensor 6a-6f is assigned with exactly one of the heat exchange adjusters 3a-3f. If the assignment is wrong for one heat exchange adjuster 3a-3f, the assignment for another heat exchange adjuster 3a-3f must be wrong, too. However, the verification is even more reliable if each and every assignment is explicitly verified.

Naturally, in other embodiments (not shown), for at least one of the heat exchange segments 5a-5f, two or more sensors 6a-6f are installed at this heat exchange segment 5a-5f and in the same room 7a-7f. These two or more sensors 6a-6f should be assigned to the heat exchange adjuster 3a-3f of said at least one of the heat exchange segment 5a-5f. The present invention is also applicable for such embodiments.

The verification process is performed automatically without further input of a person. If there are more than seven heat exchange segments 5a-5f (and respectively heat exchange adjusters 3a-3f), the heat exchange segments 5a-5f (respectively heat exchange adjusters 3a-3f) are split into two groups, while for each of the groups the verification process is performed. Groups of maximum six heat exchange segments 5a-5f (respectively heat exchange adjusters 3a-3f) are desired.

The controller 2 comprises a data storage, which stores the unit target temperature values, the assignments between the heat exchange adjusters 3a-3f, and the measurement signals received during performing the test scheme.

The controller 2 may starts the verification functionality in response to a corresponding input from the external device and/or transmit results regarding the assignments obtained by the verification functionality to the external device (not shown).

The external device, e.g. a smartphone, notebook, tablet or alike, can be used to initiate the verifying process and to receive the results of the verifying process from the controller 2. The external device is at least temporarily in data connection with the controller 2. For example, the external device is connected to the controller 2 to initiate the verifying process, and to obtain the results or information required to determine the correctness of the assignments in the controller 2 between the inputs for the measurement signals from the sensors 6a-6f and the control output to the heat exchange adjusters 3a-3f. In either case, information in form of data may be stored in the data storage of the controller 2. The data storage may store instructions regarding the test scheme.

Based on the data and information provided to the external device, the person can assess whether the coupling respectively assignment of the heat exchange segments 5a-5f and the corresponding heat exchange adjusters 3a-3f is correct and use this information for documentation purposes.

The controller 2 is comprised in a control system for controlling the heat exchange arrangement 1. The control arrangement controls the heat exchange adjusters 3a-3f and thus the flow valves 4. The system may include at least the controller 2, the heat exchange adjusters 3a-3f, and the sensors 6a-6f. The system may also comprise the flow valves 4a-4f. It is possible that flow valves 4a-4f include the heat exchange adjusters 3a-3f.

The sensors 6a-6f are comprised in a sensor arrangement, which can comprise further sensors.

The sensors 6a-6f can be included in thermostats. The thermostats allow the users to set user-targets for the temperatures at the respective thermostats (in normal operation different from the automatic verification functionality). The thermostats transmit the user-targets to the controller 2. The controller 2 regulates the assigned heat exchange adjuster 3a-3f for the individual heat exchange segment 5a-5f based on the user-target for the temperature at the assigned thermostat and the individual measurement signal received from the temperature sensor 6a-6f in the thermostat.

The controller 2 is optionally configured to determine the assignments completely itself (without requiring manual first input of the assignments). To do so, the controller 2 provides a control signal to a first heat exchange adjuster 3a. Subsequently, one of the heat exchange segments 5a-5f will provide a heat exchange output which is detectable by the respective sensor 6a-6f. Based on the sensor output, the controller 2 assigns the first heat exchange adjuster 3a with the corresponding sensor 6a. In a next step, the controller 2 provides a control signal to another heat exchange adjuster 3b and repeats the process.

In more detail, in one embodiment, the controller 2 applies a test scheme in which it triggers the heat exchange adjusters 3a-3f one after another to open their respective flow valve 4a-4f. The controller 2 may avoid that more than one of the flow valves 4a-4f is open at the same time during the test scheme. During the test scheme, the controller 2 monitors the individual measurement signals from the sensors 6a-6f. When the individual heat exchanger adjuster 3a-3f is triggered, the heat exchange medium starts to flow into the corresponding heat exchange segment 5a-5f. The floor temperature at the corresponding heat exchange segment 5a-5f then increases quickly, whereas the floor temperatures at the other heat exchange segments 5a-5f remain substantially the same. The controller 2 may detect the significant temperature increase indicated by the corresponding measurement signal from the sensor 6a-6f which observes the floor temperature at the sole heat exchange segment 5a-5f that currently provides heating. Alternatively or in addition, the controller 2 may detect that a temperature gradient over time that is derived from this measurement signal exceeds a predetermined threshold and/or exceeds an average of the temperature gradients derived from the other measurement signals during a same time period. Based on the detection, the controller 2 assigns the measurement signal responding to the triggering (in the form of the increasing temperature / high temperature gradient over time) to the currently triggered heat exchange adjuster 3a-3f.

Naturally, the same approaches can be used with room temperature sensors but the room temperature may respond slower to the opening of the respective flow valve 4a-4d than the floor temperature.

If the heat exchange arrangement 1 includes thermostats with both a floor temperature sensor (e.g. as sensors 6a-6f) and a room temperature sensor in the same device (not shown), it may be sufficient to determine and/or check the assignments for the floor temperature sensors since the room temperature sensor of the same device is naturally at the same location as the floor temperature sensor.

### Reference numbers

- 1: Heat exchange arrangement
- 2: Controller
- 3a-3f: Heat exchange adjusters
- 4a-4f: valves
- 5a-5f: Heat exchange segment
- 6a-6f: Sensors
- 7a-7f: Rooms

## Claims

1. A controller (2), for a control system for controlling a heat exchange arrangement (1) with a number of heat exchange segments (5a-5f), wherein the number is at least two, wherein the control system comprises, respectively for each of the number of heat exchange segments (5a-5f),
a corresponding heat exchange adjuster (3a-3f) for individually adjusting a heat exchange output provided by the heat exchange segment (5a-5f), and
at least one corresponding sensor (6a-6f) for providing an individual measurement signal indicative of the heat exchange output provided by the heat exchange segment (5a-5f) and/or a temperature in a room (7a-7f) at the corresponding heat exchange segment (5a-5f),
wherein the controller (2) is configured to be operatively coupled to the heat exchange adjusters (3a-3f) and the sensors (6a-6f), to store assignments between the heat exchange adjusters (3a-3f) and the individual measurement signals, and to control the heat exchange adjusters (3a-3f) individually based on the respective assigned measurement signals,
wherein the controller (2) includes a verification functionality for automatically determining, checking and/or correcting the assignments between the heat exchange adjusters (3a-3f) and the measurement signals,
**characterized in that** the controller (2) is, for the automatic verification functionality configured to, for at least the number minus one of the number of the heat exchange segments (5a-5f), set the corresponding target temperature to a unique target temperature value, and check whether a time average of the temperature indicated by the assigned measurement signal reaches a target range around the corresponding unique target temperature value.

2. The controller (2) according to claim 1, wherein the controller (2) is, for the automatic verification functionality, configured to, for at least the number minus one of the number of the heat exchange segments (5a-5f),
- control the heat exchange adjusters (3a-3f) individually according to a test scheme,
- to determine, check, and/or correct the assignments between the heat exchange adjusters (3a-3f) and the measurement signals by analyzing responses of the measurement signals from the sensors (6a-6f) to the control according to the test scheme.

3. The controller (2) according to claim 1 or 2, wherein the controller (2) is, for the automatic verification functionality, configured to, for at least the number minus one of the number of the heat exchange segments (5a-5f),
- control the corresponding heat exchange adjusters (3a-3f) to cause increases and/or decreases of the heat exchange outputs provided by the heat exchange segments (5a-5f) at different times,
- check whether the assigned measurement signals change in an expected manner during a predetermined time range after the respective heat exchange adjuster has been controlled to cause increase and/or decrease of the heat exchange output provided by the heat exchange segment (5a-5f).

4. The controller (2) according to any one of the preceding claims, wherein the control system includes, respectively for each of the heat exchange segments (5a-5f), a corresponding thermostat comprising the at least one corresponding sensor (6a-6f) for providing the individual measurement signal being indicative of the temperature in a room at the corresponding heat exchange segment (5a-5f), **characterized in that** the controller (2) is, for the automatic verification functionality, configured to, for at least the number minus one of the number of the heat exchange segments (5a-5f),
- set the corresponding target temperature to a unique target temperature value and
- check whether a time average of the temperature indicated by the assigned measurement signal reaches a target range around the corresponding unique target temperature value,
and/or
- control the heat exchange adjusters (3a-3f) to change flow (e.g. open flow) of the heat exchange medium to the corresponding heat exchange segments (5a-5f) at different unique trigger times, and
- check for temporal correlations between the trigger times and changes in the temperatures indicated by the measurement signals and/or in the temperature gradients derived from the measurement signals.

5. The controller (2) according to any one of the preceding claims, wherein the controller (2) is configured for at least temporary communication with an external device and for one of, several of, or all of the following:
- receiving information regarding the assignments from the external device and storing the assignments;
- starting the verification functionality in response to a corresponding input from the external device; and
- transmitting results regarding the assignments obtained by the verification functionality to the external device.

6. The controller (2) according to any one of the preceding claims, wherein the controller (2) comprises a data storage and is configured to store, in the data storage, at least the assignments between the heat exchange adjusters (3a-3f) and the measurement signals from the sensors (6a-6f).

7. A monitoring system for a control system for controlling a heat exchange arrangement (1) with a number of heat exchange segments (5a-5f), wherein the number is at least two, wherein the control system comprises, for each of the number of heat exchange segments (5a-5f), a corresponding heat exchange adjuster for individually adjusting a heat exchange output provided by the respective heat exchange segment (5a-5f),
wherein the monitoring system comprises, respectively for each of the number of heat exchange segments (5a-5f), at least one corresponding sensor (6a-6f) for providing an individual measurement signal indicative of the heat exchange output provided by the heat exchange segment (5a-5f) and/or a temperature in a room at the corresponding heat exchange segment (5a-5f), for example at least one corresponding temperature sensor (6a-6f),
**characterized in that** the monitoring system comprises the controller (2) according to any one of the preceding claims.

8. The monitoring system according to claim 7, wherein the heat exchange arrangement (1) is a floor heating arrangement and wherein the number of heat exchange segments (5a-5f) are floor heating segments, for example in different rooms,
wherein the sensor arrangement comprises, respectively for each of the number of floor heating segments, a corresponding floor temperature sensor (6a-6f) and/or a corresponding room temperature sensor (6a-6f).

9. The monitoring system according to claim 8, wherein the floor temperature sensors (6a-6f) are infrared temperature sensors (6a-6f) and/or wired temperature sensors (6a-6f).

10. The monitoring system according to any one of the claims 7 to 9, wherein the measurement signals are indicative of absolute individual temperatures adjacent to the respective heat exchange segments (5a-5f) and/or of present heat flows provided by the respective heat exchange segments (5a-5f) as measurands,
wherein the controller (2) is configured to check, in the verification functionality, temporal developments of absolute value and/or gradient of the measurands in response to control signals provided to the heat exchange adjusters (3a-3f) for changing the heat exchange outputs provided by the heat exchange segments (5a-5f) at different times.

11. A control system for controlling a heat exchange arrangement (1) with a number of heat exchange segments (5a-5f), wherein the number is at least two,
wherein the control system comprises, for each of the number of heat exchange segments (5a-5f), a heat exchange adjuster for individually adjusting a heat exchange output provided by the respective heat exchange segment (5a-5f),
wherein the heat exchange adjusters (3a-3f) are actuators of flow valves (4a-4f) for the heat exchange segments (5a-5f),
**characterized in that** the control system includes the monitoring system according to any one of the claims 7 to 10,
wherein the controller (2) is configured to control the heat exchange adjusters (3a-3f) of the flow valves (4a-4f).

12. A method for automatically determining, checking, and/or correcting assignments between heat exchange adjusters (3a-3f) and measurement signals in a control system for controlling a heat exchange system with a number of heat exchange segments (5a-5f), wherein the number is at least two,
providing in the control system,
for each of the number of heat exchange segments (5a-5f),
- a corresponding heat exchange adjuster for individually adjusting a heat exchange output provided by the corresponding heat exchange segment (5a-5f), and
- at least one corresponding sensor (6a-6f) providing an individual measurement signal indicative of the heat exchange output provided by the heat exchange segment (5a-5f) and/or a temperature in a room at the corresponding heat exchange segment (5a-5f),
and a controller (2) operatively coupled to the heat exchange adjusters (3a-3f) and the sensor,
including controlling the heat exchange adjusters (3a-3f) according to a test scheme by means of the controller (2) and monitoring responses of the measurement signals to the controller (2) according to the test scheme by means of the controller (2), and
determining, checking and/or correcting assignments between the heat exchange adjusters (3a-3f) and the measurement signals by analyzing the responses,
**characterized in that** the controller (2) for the automatic verification functionality, for at least the number minus one of the number of the heat exchange segments (5a-5f), sets the corresponding target temperature to a unique target temperature value, and checks whether a time average of the temperature indicated by the assigned measurement signal reaches a target range around the corresponding unique target temperature value.

13. The method according to claim 12, further comprising that the controller (2) automatically analyzes the responses and automatically generates a report regarding the assignments or
that the controller (2) transmits the responses to an external device, wherein the external devices includes and/or receives, from the controller (2), information regarding the test scheme, and wherein the external device automatically analyzes the responses and automatically generates a report regarding the assignments.

14. The method according to claim 12 or 13, wherein the heat exchange segments (3a-3f) are floor heat exchange segments (5a-5f), wherein the sensors (6a-6f) are infrared floor temperature sensors, and wherein
the test scheme comprises
- setting unique target temperature values for at least the number minus one of heat exchange segments (5a-5f) and/or
- controlling the heat exchange adjusters (3a-3f) to change flow (e.g. open flow) of the heat exchange medium to the corresponding heat exchange segments (5a-5f) at different (e.g. unique) trigger times.

15. The method according to any of claims 12 to 14, wherein the heat exchange system is a floor heating system, wherein
the controller (2) automatically determines, checks and/or corrects the assignments between the heat exchange adjusters (3a-3f) and the sensors (6a-6f) based on
- the unique target temperature values for the sensors (6a-6f) and/or the different trigger times for the heat exchange adjusters (3a-3f) and
- the respective heat exchange outputs,
wherein the sensors (6a-6f) are infrared floor temperature sensors.

## Patentansprüche

1. Eine Steuerung (2) für ein Steuersystem zur Steuerung einer Wärmeaustauschanordnung (1) mit einer Anzahl von Wärmeaustauschsegmenten (5a-5f), wobei die Anzahl mindestens zwei beträgt, wobei das Steuersystem für jedes der Wärmeaustauschsegmente (5a-5f) jeweils
einen zugehörigen Wärmeaustauscheinsteller (3a -3f) zum individuellen Einstellen einer von dem Wärmeaustauschsegment (5a-5f) bereitgestellten Wärmeaustauschleistung sowie
mindestens einen zugehörigen Sensor (6a-6f) zum Bereitstellen eines individuellen Messsignals, das Rückschlüsse auf die von dem Wärmeaustauschsegment (5a-5f) bereitgestellte Wärmeaustauschleistung und/oder eine Temperatur in einem Raum (7a-7f) an dem zugehörigen Wärmeaustauschsegment (5a-5f) zulässt, umfasst,
wobei die Steuerung (2) dazu eingerichtet ist, mit den Wärmeaustauscheinstellern (3a-3f) und den Sensoren (6a-6f) funktionell verbunden zu sein, Zuordnungen zwischen den Wärmeaustauscheinstellern (3a-3f) und den individuellen Messsignalen zu speichern und die Wärmeaustauscheinsteller (3a-3f) individuell auf Grundlage der jeweils zugeordneten Messsignale zu steuern,
wobei die Steuerung (2) eine Verifizierungsfunktionalität umfasst, um die Zuordnungen zwischen den Wärmeaustauscheinstellern (3a-3f) und den Messsignalen automatisch zu ermitteln, zu überprüfen und/oder zu korrigieren,
**dadurch gekennzeichnet, dass** die Steuerung (2) für die automatische Verifizierungsfunktionalität dazu eingerichtet ist, dass sie für mindestens die Anzahl minus eins der Anzahl der Wärmeaustauschsegmente (5a-5f) die zugehörige Solltemperatur auf einen unterscheidbaren Solltemperaturwert einstellt und prüft, ob ein zeitlicher Mittelwert der Temperatur, auf welche das das zugeordnete Messsignal Rückschlüsse zulässt, einen Zielbereich um den zugehörigen unterscheidbaren Solltemperaturwert erreicht.

2. Die Steuerung (2) nach Anspruch 1, wobei die Steuerung (2) für die automatische Verifizierungsfunktionalität dazu eingerichtet ist, für mindestens die Anzahl minus eins der Anzahl der Wärmeaustauschsegmente (5a-5f)
- die Wärmeaustauscheinsteller (3a-3f) individuell gemäß einem Testschema zu steuern und
- die Zuordnungen zwischen den Wärmeaustauscheinstellern (3a-3f) und den Messsignalen durch Analyse von Reaktionen der Messsignale der Sensoren (6a-6f) auf die Steuerung gemäß dem Testschema zu ermitteln, zu prüfen und/oder zu korrigieren.

3. Die Steuerung (2) nach Anspruch 1 oder 2, wobei die Steuerung (2) für die automatische Verifizierungsfunktionalität dazu eingerichtet ist, für mindestens die Anzahl minus eins der Anzahl der Wärmeaustauschsegmente (5a-5f)
- die zugehörigen Wärmeaustauscheinsteller (3a-3f) zu steuern, um zu unterschiedlichen Zeitpunkten Erhöhungen und/oder Verringerungen der von den Wärmeaustauschsegmenten (5a-5f) bereitgestellten Wärmeaustauschleistungen zu verursachen, und
- zu prüfen, ob sich die zugeordneten Messsignale während eines vorbestimmten Zeitraums, nachdem der jeweilige Wärmeaustauscheinsteller gesteuert wurde, um die Erhöhung und/oder Verringerung der von dem Wärmeaustauschsegment (5a-5f) bereitgestellten Wärmeaustauschleistung zu bewirken, in einer erwarteten Weise ändern.

4. Die Steuerung (2) nach einem der vorhergehenden Ansprüche, wobei das Steuersystem für jedes der Wärmeaustauschsegmente (5a-5f) jeweils einen zugehörigen Thermostaten umfasst, der den mindestens einen zugehörigen Sensor (6a-6f) zur Bereitstellung des individuellen Messsignals aufweist, welche Rückschlüsse auf die Temperatur in einem Raum an dem zugehörigen Wärmeaustauschsegment (5a-5f) zulässt,
**dadurch gekennzeichnet, dass** die Steuerung (2) für die automatische Verifizierungsfunktionalität dazu eingerichtet ist, für mindestens die Anzahl minus eins der Anzahl der Wärmeaustauschsegmente (5a-5f)
- die zugehörige Solltemperatur auf einen unterscheidbaren Solltemperaturwert einzustellen und
- zu prüfen, ob ein Zeitmittelwert der Temperatur, auf welche das zugeordnete Messsignal Rückschlüsse zulässt, einen Zielbereich um den zugehörigen unterscheidbaren Solltemperaturwert erreicht,
und/oder
- die Wärmeaustauscheinsteller (3a-3f) zu steuern, um einen Fluss des Wärmeaustauschmediums zu den zugehörigen Wärmeaustauschsegmenten (5a-5f) zu unterschiedlichen unterscheidbaren Auslösezeitpunkten zu ändern (bspw. freizugeben), und
- auf zeitliche Korrelationen zwischen den Auslösezeitpunkten und Veränderungen der durch die Messsignale angezeigten Temperaturen und/oder der aus den Messsignalen abgeleiteten Temperaturgradienten zu prüfen.

5. Die Steuerung (2) nach einem der vorhergehenden Ansprüche, wobei die Steuerung (2) eingerichtet ist zur zumindest zeitweisen Kommunikation mit einer externen Vorrichtung eingerichtet und für eines, mehreres oder alle des folgenden eingerichtet ist:
- Empfangen von Informationen über die Zuordnungen von der externen Vorrichtung und Speichern der Zuordnungen;
- Starten der Verifizierungsfunktionalität als Reaktion auf eine entsprechende Eingabe von der externen Vorrichtung; und
- Übertragen von Ergebnissen bezüglich der durch die Verifizierungsfunktionalität ermittelten Zuordnungen an die externe Vorrichtung.

6. Die Steuerung (2) nach einem der vorhergehenden Ansprüche, wobei die Steuerung (2) einen Datenspeicher umfasst und dazu eingerichtet ist, zumindest die Zuordnungen zwischen den Wärmeaustauscheinstellern (3a-3f) und den Messsignalen der Sensoren (6a-6f) in dem Datenspeicher zu speichern.

7. Ein Überwachungssystem für ein Steuersystem zum Steuern einer Wärmeaustauschanordnung (1) mit einer Anzahl von Wärmeaustauschsegmenten (5a-5f), wobei die Anzahl mindestens zwei beträgt und das Steuersystem für jedes der Wärmeaustauschsegmente (5a-5f) einen zugehörigen Wärmeaustauscheinsteller zur individuellen Einstellung einer von dem jeweiligen Wärmeaustauschsegment (5a-5f) bereitgestellten Wärmeaustauschleistung umfasst,
wobei das Überwachungssystem für jedes der Wärmeaustauschsegmente (5a-5f) mindestens einen zugehörigen Sensor (6a-6f) zur Bereitstellung eines individuellen Messsignals umfasst, welches Rückschlusse auf die von dem Wärmeaustauschsegment (5a-5f) bereitgestellte Wärmeaustauschleistung und/oder eine Temperatur in einem Raum an dem zugehörigen Wärmeaustauschsegment (5a-5f) zulässte, beispielsweise mindestens einen zugehörigen Temperatursensor (6a-6f),
**dadurch gekennzeichnet, dass** das Überwachungssystem die Steuerung (2) nach einem der vorhergehenden Ansprüche umfasst.

8. Das Überwachungssystem nach Anspruch 7, wobei die Wärmeaustauschanordnung (1) eine Fußbodenheizungsanlage ist und wobei es sich bei den Wärmeaustauschsegmenten um Fußbodenheizungssegmente handelt, beispielsweise in unterschiedlichen Räumen,
wobei die Sensoranordnung für jedes der Fußbodenheizungssegmente jeweils einen zugehörigen Fußbodentemperatursensor (6a-6f) und/oder einen zugehörigen Raumtemperatursensor (6a-6f) umfasst.

9. Das Überwachungssystem nach Anspruch 8, wobei die Fußbodentemperatursensoren (6a-6f) Infrarot-Temperatursensoren (6a-6f) und/oder drahtgebundene Temperatursensoren (6a-6f) sind.

10. Das Überwachungssystem nach einem der Ansprüche 7 bis 9, wobei die Messsignale als Messgrößen Rückschlüsse auf absolute individuelle Temperaturen angrenzend an die jeweiligen Wärmeaustauschsegmente (5a-5f) und/oder aktuelle, von den jeweiligen Wärmeaustauschsegmenten (5a-5f) bereitgestellte Wärmeströme zulassen,
wobei die Steuerung (2) dazu eingerichtet ist, in der Verifizierungsfunktionalität zeitliche Entwicklungen des absoluten Werts und/oder des Gradienten der Messgrößen als Reaktion auf Steuersignale zu prüfen, welche den Wärmeaustauscheinstellern (3a-3f) zugeführt werden, um die von den Wärmeaustauschsegmenten (5a-5f) bereitgestellten Wärmeaustauschleistungen zu unterschiedlichen Zeitpunkten zu ändern.

11. Ein Steuersystem zum Steuern einer Wärmeaustauschanordnung (1) mit einer Anzahl von Wärmeaustauschsegmenten (5a-5f), wobei die Anzahl mindestens zwei beträgt,
wobei das Steuersystem für jedes der Wärmeaustauschsegmente (5a-5f) einen Wärmeaustauscheinsteller zur individuellen Einstellung einer von dem jeweiligen Wärmeaustauschsegment (5a-5f) bereitgestellten Wärmeaustauschleistung umfasst,
wobei die Wärmeaustauscheinsteller (3a-3f) Stellglieder von Durchflussventilen (4a-4f) für die Wärmeaustauschsegmente (5a-5f) sind,
**dadurch gekennzeichnet, dass** das Steuersystem das Überwachungssystem nach einem der Ansprüche 7 bis 10 umfasst,
wobei die Steuerung (2) dazu eingerichtet ist, die Wärmeaustauscheinsteller (3a-3f) der Durchflussventile (4a-4f) zu steuern.

12. Ein Verfahren zur automatischen Ermittlung, Prüfung und/oder Korrektur von Zuordnungen zwischen Wärmeaustauscheinstellern (3a-3f) und Messsignalen in einem Steuersystem zum Steuern eines Wärmeaustauschsystems mit einer Anzahl von Wärmeaustauschsegmenten (5a-5f), wobei die Anzahl mindestens zwei beträgt,
Bereitstellen
- eines zugehörigen Wärmeaustauscheinstellers zur individuellen Einstellung einer von dem zugehörigen Wärmeaustauschsegment (5a-5f) bereitgestellten Wärmeaustauschleistung und
- mindestens eines zugehörigen Sensors (6a-6f), der ein individuelles Messsignal bereitstellt, welches Rückschlüsse auf die von dem Wärmeaustauschsegment (5a-5f) bereitgestellte Wärmeaustauschleistung und/oder eine Temperatur in einem Raum an dem zugehörigen Wärmeaustauschsegment (5a-5f) zulässt,
für jedes der Wärmeaustauschsegmente (5a-5f)
sowie einer mit den Wärmeaustauscheinstellern (3a-3f) und den Sensoren (6a-6f) funktionell verbundenen Steuerung (2) in dem Steuersystem,
umfassend Steuern der Wärmeaustauscheinsteller (3a-3f) gemäß einem Testschema und Überwachung der Reaktionen der Messsignale auf das Steuern gemäß dem Testschema mittels der Steuerung (2), und
Ermitteln, Überprüfen und/oder Korrigieren der Zuordnungen zwischen den Wärmeaustauscheinstellern (3a-3f) und den Messsignalen durch Analyse der Reaktionen,
**dadurch gekennzeichnet, dass** die Steuerung (2) für die automatische Verifizierungsfunktionalität für mindestens die Anzahl minus eins der Anzahl der Wärmeaustauschsegmente (5a-5f) die zugehörige Solltemperatur auf einen unterscheidbaren Solltemperaturwert einstellt und prüft, ob ein Zeitmittelwert der Temperatur, auf welche das Messsignal zugeordnete Rückschlüsse zulässt, einen Zielbereich um den zugehörigen unterscheidbaren Solltemperaturwert erreicht.

13. Das Verfahren nach Anspruch 12, ferner umfassend, dass die Steuerung (2) die Reaktionen automatisch analysiert und automatisch einen Bericht über die Zuordnungen erstellt, oder
dass die Steuerung (2) die Reaktionen an eine externe Vorrichtung überträgt, wobei die externe Vorrichtung Informationen über das Testschema umfasst und/oder von der Steuerung (2) empfängt, und wobei die externe Vorrichtung die Reaktionen automatisch analysiert und automatisch einen Bericht über die Zuordnungen erstellt.

14. Das Verfahren nach Anspruch 12 oder 13, wobei es sich bei den Wärmeaustauschsegmente (5a-5f) um Fußboden-Wärmeaustauschsegmente (5a-5f) handelt, wobei die Sensoren (6a-6f) Infrarot-Fußbodentemperatursensoren sind und wobei das Testschema umfasst:
- Einstellen unterscheidbarer Solltemperaturwerte für mindestens die Anzahl minus eins der Anzahl der Wärmeaustauschsegmente (5a-5f) und/oder
- Steuern der Wärmeaustauscheinsteller (3a-3f), um den Fluss des Wärmeaustauschmediums zu den zugehörigen Wärmeaustauschsegmenten (5a-5f) zu unterschiedlichen (bspw. unterscheidbaren) Auslösezeitpunkten zu ändern, beispielsweise einen Durchfluss zu ändern (bspw. freizugeben).

15. Das Verfahren nach einem der Ansprüche 12 bis 14, wobei das Wärmeaustauschsystem ein Fußbodenheizungssystem ist,
wobei die Steuerung (2) die Zuordnungen zwischen den Wärmeaustauscheinstellern (3a-3f) und den Sensoren (6a-6f) automatisch auf Grundlage
- der unterscheidbaren Solltemperaturwerte für die Sensoren (6a-6f) und/oder der unterschiedlichen Auslösezeitpunkte für die Wärmeaustauscheinsteller (3a-3f) und
- der jeweiligen Wärmeaustauschleistungen
ermittelt, prüft und/oder korrigiert,
wobei die Sensoren (6a-6f) Infrarot-Fußbodentemperatursensoren sind.

## Revendications

1. Dispositif de commande (2), pour un système de commande permettant de commander un agencement d'échange thermique (1) avec un nombre de segments d'échange thermique (5a-5f), où le nombre est au moins égal à deux, où le système de commande comprend, respectivement pour chacun du nombre de segments d'échange thermique (5a-5f),
un dispositif de réglage d'échange thermique correspondant (3a-3f) pour ajuster individuellement une sortie d'échange thermique fournie par le segment d'échange thermique (5a-5f), et
au moins un capteur correspondant (6a-6f) pour fournir un signal de mesure individuel indicatif de la sortie d'échange thermique fournie par le segment d'échange thermique (5a-5f) et/ou d'une température dans une pièce (7a-7f) au niveau du segment d'échange thermique correspondant (5a-5f),
où le dispositif de commande (2) est configuré pour être couplé de manière opérationnelle aux dispositifs de réglage d'échange thermique (3a-3f) et aux capteurs (6a-6f), pour stocker des associations entre les dispositifs de réglage d'échange thermique (3a-3f) et les signaux de mesure individuels, et pour commander les dispositifs de réglage d'échange thermique (3a-3f) individuellement sur la base des signaux de mesure associés respectifs,
où le dispositif de commande (2) comprend une fonctionnalité de vérification pour déterminer, vérifier et/ou corriger automatiquement les associations entre les dispositifs de réglage d'échange thermique(3a-3f) et les signaux de mesure,
**caractérisé en ce que** le dispositif de commande (2) est, pour la fonctionnalité de vérification automatique, configuré pour, pour au moins le nombre moins un du nombre de segments d'échange thermique (5a-5f), régler la température cible correspondante à une valeur de température cible unique, et vérifier si une moyenne temporelle de la température indiquée par le signal de mesure associé atteint une plage cible autour de la valeur de température cible unique correspondante.

2. Dispositif de commande (2) selon la revendication 1, dans lequel le dispositif de commande (2) est, pour la fonctionnalité de vérification automatique, configuré pour, pour au moins le nombre moins un du nombre de segments d'échange thermique (5a-5f),
- commander individuellement les dispositifs de réglage d'échange thermique (3a-3f) selon un schéma de test,
- déterminer, vérifier et/ou corriger les associations entre les dispositifs de réglage d'échange thermique (3a-3f) et les signaux de mesure en analysant les réponses des signaux de mesure provenant des capteurs (6a-6f) à la commande selon le schéma de test.

3. Dispositif de commande (2) selon la revendication 1 ou 2, dans lequel le dispositif de commande (2) est, pour la fonctionnalité de vérification automatique, configuré pour, pour au moins le nombre moins un du nombre de segments d'échange thermique (5a-5f),
- commander les dispositifs de réglage d'échange thermique correspondants (3a-3f) afin de provoquer des augmentations et/ou des diminutions des sorties d'échange thermique fournies par les segments d'échange thermique (5a-5f) à différents instants,
- vérifier si les signaux de mesure associés varient de la manière attendue pendant une plage de temps prédéterminée après que le dispositif de réglage d'échange thermique correspondant a été commandé pour provoquer une augmentation et/ou une diminution de la sortie d'échange thermique fournie par le segment d'échange thermique (5a-5f).

4. Dispositif de commande (2) selon l'une quelconque des revendications précédentes, dans lequel le système de commande comprend, respectivement pour chacun des segments d'échange thermique (5a-5f), un thermostat correspondant comprenant l'au moins un capteur correspondant (6a-6f) pour fournir le signal de mesure individuel étant indicatif de la température dans une pièce au niveau du segment d'échange thermique correspondant (5a-5f), **caractérisé en ce que** le dispositif de commande (2) est, pour la fonctionnalité de vérification automatique, configuré pour, pour au moins le nombre moins un du nombre de segments d'échange thermique (5a-5f),
- régler la température cible correspondante à une valeur de température cible unique et
- vérifier si une moyenne temporelle de la température indiquée par le signal de mesure associé atteint une plage cible autour de la valeur de température cible unique correspondante,
et/ou
- commander les dispositifs de réglage d'échange thermique (3a-3f) afin de modifier l'écoulement (par exemple, établir l'écoulement) du milieu d'échange thermique vers les segments d'échange thermique correspondants (5a-5f) à différents instants de déclenchement uniques, et
- vérifier des corrélations temporelles entre les instants de déclenchement et les variations des températures indiquées par les signaux de mesure et/ou les gradients de température dérivés des signaux de mesure.

5. Dispositif de commande (2) selon l'une quelconque des revendications précédentes, dans lequel le dispositif de commande (2) est configuré pour au moins une communication temporaire avec un dispositif externe et pour effectuer l'une, plusieurs ou l'ensemble des opérations suivantes :
- la réception, en provenance du dispositif externe, d'informations concernant les associations et le stockage des associations ;
- le démarrage de la fonctionnalité de vérification en réponse à une entrée correspondante provenant du dispositif externe ; et
- la transmission au dispositif externe des résultats concernant les associations obtenus par la fonctionnalité de vérification.

6. Dispositif de commande (2) selon l'une quelconque des revendications précédentes, dans lequel le dispositif de commande (2) comprend un dispositif de stockage de données et est configuré pour stocker, dans le dispositif de stockage de données, au moins les associations entre les dispositifs de réglage d'échange thermique (3a-3f) et les signaux de mesure provenant des capteurs (6a-6f).

7. Système de surveillance pour un système de commande permettant de commander un agencement d'échange thermique (1) avec un nombre de segments d'échange thermique (5a-5f), où le nombre est au moins égal à deux, où le système de commande comprend, pour chacun des segments d'échange thermique (5a-5f), un dispositif de réglage d'échange thermique correspondant pour ajuster individuellement une sortie d'échange thermique fournie par le segment d'échange thermique respectif (51-5f),
où le système de surveillance comprend, respectivement pour chacun du nombre de segments d'échange thermique (5a-5f), au moins un capteur correspondant (6a-6f) pour fournir un signal de mesure individuel indicatif de la sortie d'échange thermique fournie par le segment d'échange thermique (5a-5f) et/ou d'une température dans une pièce au niveau du segment d'échange thermique correspondant (5a-5f), par exemple au moins un capteur de température correspondant (6a-6f),
**caractérisé en ce que** le système de surveillance comprend le dispositif de commande (2) selon l'une quelconque des revendications précédentes.

8. Système de surveillance selon la revendication 7, dans lequel l'agencement d'échange thermique (1) est un agencement de chauffage par le sol et dans lequel le nombre de segments d'échange thermique (5a-5f) sont des segments de chauffage par le sol, par exemple dans différentes pièces,
où l'agencement de capteur comprend, respectivement pour chacun du nombre de segments de chauffage par le sol, un capteur de température de sol correspondant (6a-6f) et/ou un capteur de température de pièce correspondant (6a-6f).

9. Système de surveillance selon la revendication 8, dans lequel les capteurs de température de sol (6a-6f) sont des capteurs de température infrarouges (6a-6f) et/ou des capteurs de température filaires (6a-6f).

10. Système de surveillance selon l'une quelconque des revendications 7 à 9, dans lequel les signaux de mesure sont indicatifs, en tant que grandeurs mesurées, de températures absolues individuelles adjacentes aux segments d'échange thermique respectifs (5a-5f) et/ou de flux thermiques actuels fournis par les segments d'échange thermique respectifs (5a-5f),
où le dispositif de commande (2) est configuré pour vérifier, dans la fonctionnalité de vérification, les évolutions temporelles de la valeur absolue et/ou du gradient des grandeurs mesurées en réponse à des signaux de commande fournis aux dispositifs de réglage d'échange thermique (3a-3f) pour modifier les sorties d'échange thermique fournies par les segments d'échange thermique (5a-5f) à différents instants.

11. Système de commande pour commander un agencement d'échange thermique (1) avec un nombre de segments d'échange thermique (5a-5f), où le nombre est au moins égal à deux,
où le système de commande comprend, pour chacun du nombre de segments d'échange thermique (5a-5f), un dispositif de réglage d'échange thermique pour ajuster individuellement une sortie d'échange thermique fournie par le segment d'échange thermique respectif (5a-5f),
où les dispositifs de réglage d'échange thermique (3a-3f) sont des actionneurs de vannes de débit (4a-4f) pour les segments d'échange thermique (5a-5f),
**caractérisé en ce que** le système de commande comprend le système de surveillance selon l'une quelconque des revendications 7 à 10,
où le dispositif de commande (2) est configuré pour commander les dispositifs de réglage d'échange thermique (3a-3f) des vannes de débit (4a-4f).

12. Procédé pour déterminer, vérifier et/ou corriger automatiquement des associations entre des dispositifs de réglage d'échange thermique (3a-3f) et des signaux de mesure dans un système de commande permettant de commander un système d'échange thermique avec un nombre de segments d'échange thermique (5a-5f), où le nombre est au moins égal à deux,
fournissant, dans le système de commande,
pour chacun du nombre de segments d'échange thermique (5a-5f),
- un dispositifs de réglage d'échange thermique correspondant pour ajuster individuellement une sortie d'échange thermique fournie par le segment d'échange thermique correspondant (5a-5f), et
- au moins un capteur correspondant (6a-6f) fournissant un signal de mesure individuel indicatif de la sortie d'échange thermique fournie par le segment d'échange thermique (5a-5f) et/ou d'une température dans une pièce au niveau du segment d'échange thermique correspondant (5a-5f),
et un dispositif de commande (2) couplé de manière opérationnelle aux dispositifs de réglage d'échange thermique (3a-3f) et au capteur,
comprenant la commande des dispositifs de réglage d'échange thermique (3a-3f) selon un schéma de test au moyen du dispositif de commande (2) et la surveillance des réponses des signaux de mesure au dispositif de commande (2) selon le schéma de test au moyen du dispositif de commande (2), et
la détermination, la vérification et/ou la correction des associations entre les dispositifs de réglage d'échange thermique (3a-3f) et les signaux de mesure par l'analyse des réponses,
**caractérisé en ce que** le dispositif de commande (2), pour la fonctionnalité de vérification automatique, pour au moins le nombre moins un du nombre de segments d'échange thermique (5a-5f), règle la température cible correspondante à une valeur de température cible unique, et vérifie si une moyenne temporelle de la température indiquée par le signal de mesure associé atteint une plage cible autour de la valeur de température cible unique correspondante.

13. Procédé selon la revendication 12, comprenant en outre le fait que le dispositif de commande (2) analyse automatiquement les réponses et génère automatiquement un rapport concernant les associations ou
que le dispositif de commande (2) transmet les réponses à un dispositif externe, où le dispositif externe comprend et/ou reçoit, du dispositif de commande (2), des informations concernant le schéma de test, et où le dispositif externe analyse automatiquement les réponses et génère automatiquement un rapport concernant les associations.

14. Procédé selon la revendication 12 ou 13, dans lequel les segments d'échange thermique (3a-3f) sont des segments d'échange thermique par le sol (5a-5f), dans lequel les capteurs (6a-6f) sont des capteurs infrarouges de température du sol, et dans lequel
le schéma de test comprend
- le réglage de valeurs de température cibles uniques pour au moins le nombre moins un des segments d'échange thermique (5a-5f) et/ou
- la commande des dispositifs de réglage d'échange thermique (3a-3f) afin de modifier l'écoulement (par exemple, établir l'écoulement) du milieu d'échange thermique vers les segments d'échange thermique correspondants (5a-5f) à des instants de déclenchement différents (par exemple, uniques).

15. Procédé selon l'une des revendications 12 à 14, dans lequel le système d'échange thermique est un système de chauffage par le sol, dans lequel
le dispositif de commande (2) détermine, vérifie et/ou corrige automatiquement les associations entre les dispositifs de réglage d'échange thermique (3a-3f) et les capteurs (6a-6f) sur la base
- des valeurs de température cible uniques pour les capteurs (6a-6f) et/ou des instants de déclenchement différents pour les dispositifs de réglage d'échange thermique (3a-3f) et
- des sorties d'échange thermique respectives,
où les capteurs (6a-6f) sont des capteurs infrarouges de température du sol.
